# EUROPÄISCHE PATENTANMELDUNG

(11) **EP 2 072 879 A1**
(43) Veröffentlichungstag der Anmeldung: **24.06.2009**
(21) Anmeldenummer: 07024947.9
(22) Anmeldetag: 21.12.2007
(51) Int. Cl.: F16L 39/00, F28F 9/00, F28F 9/04

(54) **Vorrichtung zur Verbindung wenigstens eines Rohrleitungspaares, Verwendung einer solchen Vorrichtung sowie Wärmetauscher**

(71) Anmelder: Behr France Hambach S.A.R.L., 57912 Hambach (FR)
(72) Erfinder: Meyer, Jean Claude, 57200 Wiesviller (FR); Kaczmarek, Fabrice, 57910 Hambach (FR)
(74) Vertreter: Grauel, Andreas

(57) **Zusammenfassung**

Die Erfindung betrifft eine Vorrichtung zur Verbindung wenigstens eines Rohrleitungspaares umfassend einen ersten Bügel (1) und einen zweiten Bügel (2), die miteinander verbindbar sind.

Erfindungsgemäß bilden der erste Bügel (1) und der zweite Bügel (2) jeweils zwei Halbschalen (3, 3', 4, 4') aus, die bei miteinander verbundenen Bügeln (1, 2) sich gegenüberliegen und im Wesentlichen zylinderförmige Aufnahmen für wenigstens ein Rohrleitungspaar (5) bilden. Ferner weist wenigstens ein Bügel eine Lasche (6) zur direkten oder indirekten Befestigung an einem Bauteil (7), insbesondere an einem Wärmetauscher eines Fahrzeugs, auf.

Die Erfindung betrifft darüber hinaus die Verwendung einer solchen Vorrichtung sowie einen Wärmetauscher eines Fahrzeugs.

## Beschreibung

Die Erfindung betrifft eine Vorrichtung zur Verbindung wenigstens eines Rohrleitungspaares umfassend einen ersten Bügel und einen zweiten Bügel, die miteinander verbindbar sind. Ferner betrifft die Erfindung die Verwendung einer solchen Vorrichtung sowie einen Wärmetauscher eines Fahrzeugs.

In einem Fluidkreislauf, beispielsweise in einem Kältemittelkreislauf angeordnete Bauteile oder Komponenten weisen in der Regel zumindest einen Zulauf und einen Ablauf für das zirkulierende Fluid auf. Die hieran anschließenden Zu- und Ablaufleitungen werden streckenweise parallel geführt, so dass sich Rohrleitungspaare ergeben. Aufgrund der oftmals nicht zu unterschätzenden Leitungslängen in einem solchen Fluidkreislauf müssen Rohrleitungsabschnitte zusammengesetzt und gegebenenfalls gestützt werden. Zur Stützung kann beispielsweise eine Befestigung des Rohrleitungspaares an dem jeweiligen Bauteil vorgesehen werden. Entsprechende Verbindungs- und/oder Befestigungsvorrichtungen für Rohrleitungspaare sind aus dem Stand der Technik bereits bekannt.

Der US 60 70 659 A beispielsweise ist ein Gehäuse für einen Wärmetauscher zu entnehmen, das einen angeformten Rohrverbindungsabschnitt zur Verbindung zweier innerhalb des Gehäuses angeordneter Rohre mit zwei weiteren außerhalb des Gehäuses angeordneten Rohren aufweist. Die freien Endabschnitte der innerhalb des Gehäuses angeordneten Rohre werden hierzu in den Rohrverbindungsabschnitt des Gehäuses eingelegt. Von außen werden die Endabschnitte der außerhalb des Gehäuses angeordneten Rohre durch den Rohrverbindungsabschnitt in die Endabschnitte der innerhalb des Gehäuses angeordneten Rohre eingeführt. Zur Lagesicherung wird zusätzlich eine die Endabschnitte der außerhalb des Gehäuses angeordneten Rohre einfassende Platte mit dem Rohrverbindungsabschnitt des Gehäuses verschraubt. Die Herstellung eines solchen Gehäuses ist aufgrund des angeformten Rohrverbindungsabschnittes allerdings sehr aufwendig und erweist sich somit, insbesondere im Hinblick auf die Kosten, als Nachteil.

In der DE 101 33 940 A1 wird daher eine Verbindungsvorrichtung für zwei im Wesentlichen parallel zueinander verlaufende Leitungen mit zwei weiteren Leitungen vorgeschlagen, die mindestens ein plattenförmiges Teil mit zwei C-förmigen Ausnehmungen zur Aufnahme eines Leitungspaares aufweist. Die C-förmigen Ausnehmungen sind derart angeordnet, dass sie sich in zueinander senkrechten Richtungen öffnen. Zur Verbindung der Leitungen wird das plattenförmige Teil auf die Endabschnitte des ersten Leitungspaares gesteckt, so dass dessen C-förmige Aufnahmen jeweils eine endseitige Bördelung der beiden Leitungen hintergreifen. Die Endabschnitte des zweiten Leitungspaares weisen jeweils eine zurückliegende Bördelkante auf, die als Anlageflächen für die Bördelkanten des ersten Leitungspaares dienen, wenn das zweite Leitungspaar in das erste Leitungspaar eingesetzt ist. Ein zweites plattenförmiges Teil mit zwei C-förmigen Ausnehmungen wird auf die Endabschnitte des zweiten Leitungspaares gesteckt, so dass die C-förmigen Ausnehmungen die zurückliegenden Bördelkanten hintergreifen, und dann mit dem ersten plattenförmigen Teil verschraubt. Somit ist die Leitungsverbindung zumindest in axialer Richtung fixiert. Erfolgt die Anordnung des zweiten plattenartigen Teils um 180° versetzt zu dem ersten plattenartigen Teil, ist die Leitungsverbindung auch in Querrichtung fixiert. Die vorgeschlagene Verbindungsvorrichtung ermöglicht lediglich eine Verbindung der Leitungen miteinander, nicht jedoch die Verbindungen der Leitungen an einem Bauteil zur Stützung des Leitungspaketes. Bei einer Leitungsführung über eine längere Strecke kann dies jedoch erwünscht sein.

Aufgabe der vorliegenden Erfindung ist es daher, eine Vorrichtung der eingangs genannten Art derart weiterzubilden, dass sie eine Befestigung eines Rohrleitungspaares an einem Bauteil ermöglicht, dabei nicht nur einfach und kostengünstig herstellbar, sondern auch einfach zu montieren ist.

Zur Lösung der Aufgabe wird eine Vorrichtung mit den Merkmalen des Anspruchs 1 vorgeschlagen. Bevorzugte Ausführungsformen werden in den Unteransprüchen beschrieben. Ferner wird die Aufgabe gelöst durch die in Anspruch 9 vorgeschlagene Verwendung einer solchen Vorrichtung sowie einen Wärmetauscher mit den Merkmalen des Anspruchs 10.

Erfindungsgemäß bilden der erste Bügel und der zweite Bügel der Vorrichtung jeweils zwei Halbschalen aus, die bei miteinander verbundenen Bügeln sich gegenüberliegen und im Wesentlichen zylinderförmige Aufnahmen für wenigstens ein Rohrleitungspaar bilden. Ferner weist wenigstens ein Bügel eine Lasche zur direkten oder indirekten Befestigung an einem Bauteil, insbesondere an einem Wärmetauscher eines Fahrzeugs, auf.

Die lediglich einen ersten und einen zweiten Bügel umfassende Vorrichtung kann demnach nicht nur zur Verbindung der Rohrleitungen eines Rohrleitungspaares miteinander oder mit einem weiteren Rohrleitungspaar eingesetzt werden, sondern auch zur Befestigung der jeweiligen Rohrleitungen an einem Bauteil. Dabei stützt das Bauteil die Vorrichtung, so dass die Rohrleitungen stabil in ihrer Lage gehalten werden. Die Vorrichtung ist somit multifunktional einsetzbar.

Vorzugsweise weisen die Halbschalen in Rohrleitungs-Längsrichtung wenigstens einen konisch verlaufenden Abschnitt zur Aufnahme eines aufgeweiteten Rohrabschnittes auf. Eine derartige Aufweitung besitzen in der Regel die Endabschnitte einer Rohrleitung, die mit einer weiteren Rohrleitung verbunden werden sollen. Hierzu wird der Endabschnitt der weiteren Rohrleitung einfach in den aufgeweiteten Endabschnitt eingeschoben. Die Halbschalen bilden somit bei verbundenen Bügeln eine Negativform des jeweils aufzunehmenden Rohrleitungsendabschnittes aus. Der konische Verlauf verhindert ferner, dass die Rohrleitung in zumindest einer Rohrleitungs-Längsrichtung aus der Vorrichtung herausgezogen werden kann.

Da die Endabschnitte einer Rohrleitung zur Stabilisierung häufig auch eine Bördelung besitzen, weisen die Halbschalen weiterhin bevorzugt wenigstens eine in einer Ebene quer zur Rohneitungs-Längsrichtung verlaufende Nut zur Aufnahme der Bördelung einer Rohrleitung auf. Indem die Bördelkante bei eingelegter Rohrleitung in Eingriff mit der ringförmigen Nut der Halbschalen steht, dient auch diese konkrete Ausbildung der Halbschalen dazu, die Lage der Rohrleitungen in Längsrichtung, bevorzugt in beide Längsrichtungen, zu fixieren.

Vorteilhafterweise sind der erste Bügel und der zweite Bügel mittels einer Schraub-, Stift-, Steck-, Rast- und/oder Klemmverbindung miteinander verbindbar. Dadurch wird das Zusammensetzen und Verbinden der beiden Bügel vereinfacht, insbesondere, wenn das Zusammensetzen und Verbinden erst vor Ort beim Kunden erfolgen soll. Beispielsweise kann einer der beiden Bügel zur Verbindung mit dem jeweils anderen Bügel eine Ausnehmung mit wenigstens einer die Ausnehmung hinterschneidenden Nut zur Aufnahme eines mit wenigstens einer Rastnase versehenen Ansatzes des anderen Bügels aufweisen. Zur Verbindung müssen die Bügel einfach aufeinander gesteckt und der Ansatz mit der Rastnase in die Ausnehmung mit der Nut gedrückt werden.

Alternativ oder ergänzend hierzu können beide Bügel zur Verbindung miteinander auch korrespondierende Anlageflächen mit Öffnungen zur Aufnahme eines Verbindungsmittels, vorzugsweise eines Stiftes, aufweisen, wobei sich die Öffnungen aneinander liegender Flächen jeweils überdecken. Wird der Stift in Rohrleitungs-Längsrichtung in die Öffnungen eingeführt, bewirkt dies eine formschlüssige Verbindung in Querrichtung zur Rohrleitungs-Längsachse. Besitzt der Stift zudem Übermaß gegenüber der Öffnungen, kann zudem eine kraftschlüssige Verbindung in Rohrleitungs-Längsrichtung bewirkt werden. Der Vorteil einer solchen Verbindung ist darin zu sehen, dass sie ohne Einsatz eines Spezialwerkzeuges einfach herstellbar und damit kundenfreundlich ist.

Weiterhin bevorzugt ist die wenigstens eine Lasche eines Bügels ebenfalls mittels einer Schraub-, Stift-, Steck-, Rast- und/oder Klemmverbindung direkt oder indirekt an dem Bauteil befestigbar. Die Vorteile derartiger Verbindungstechniken sind vorstehend im Zusammenhang mit der Verbindung der beiden Bügel miteinander bereits beschrieben worden. Gegebenenfalls ist an dem Bauteil ein zur Befestigung der Lasche geeignetes Gegenstück vorzusehen, das jedoch nicht Teil der Vorrichtung ist.

Bevorzugt sind zudem beide Bügel aus Kunststoff. Kunststoffteile weisen gegenüber Bauteilen aus Metall ein geringes Gewicht auf und sind zudem kostengünstig herstellbar. Insbesondere lassen sich komplexere Formteile besonderes einfach aus Kunststoff herstellen. Da die Befestigung der Bügel an dem Bauteil, beispielsweise einem Wärmetauscher, bevorzugt über eine Lasche mittels einer Schraub-, Stift-, Steck-, Rast- und/oder Klemmverbindung erfolgt, ist unerheblich, dass die Vorrichtung -wie üblich bei der Verbindung von Rohrleitungen mit einem Bauteil, das im Wesentlichen aus Metall besteht- nicht mit dem Bauteil verlötet werden kann.

Ferner wird die Verwendung einer erfindungsgemäßen Vorrichtung zur Verbindung wenigstens eines Rohrleitungspaares miteinander und zur Befestigung des Rohrleitungspaares an einem Wärmetauscher an einem Fahrzeug beansprucht. Hierbei kommen die Vorteile der Vorrichtung besonders zur Geltung, da ein allgemeines Interesse besteht, derartige Bauteile, beispielsweise als Komponenten einer Fahrzeugklimaanlage, leichter, einfacher herstellbar und damit kostengünstiger zu gestalten.

Gegenstand der Erfindung ist daher auch ein Wärmetauscher eines Fahrzeugs, der eine solche Vorrichtung umfasst.

Bevorzugt weist der Wärmetauscher wenigstens eine Halteplatte zur Aufnahme der Lasche eines Bügels auf. Diese Halteplatte besteht vorzugsweise aus Aluminium oder einer Aluminiumlegierung und ist mit dem Wärmetauscher verlötet und/oder verschraubt. Bevorzugt ist die Halteplatte zudem derart ausgebildet, dass die Vorrichtung zur Verbindung von Rohrleitungen mittels einer Schraub-, Stift-, Steck-, Rast- und/oder Klemmverbindung mit der Halteplatte verbunden werden kann.

Konkrete Ausführungsformen der Erfindung werden nachfolgend anhand der Figuren näher beschrieben. Es zeigen:
- Fig. 1: eine perspektivische Darstellung einer ersten Ausführungsform einer Verbindungsvorrichtung an einem Wärmetauscher in unverbundenem Zustand,
- Fig. 2: eine perspektivische Darstellung der Ausführungsform nach Fig. 1 in verbundenem Zustand,
- Fig. 3: eine perspektivische Darstellung einer zweiten Ausführungsform,
- Fig. 4: eine weitere perspektivische Darstellung der Ausführungsform nach Fig. 3,
- Fig. 5: eine perspektivische Darstellung eines Teils eines Wärmetauschers,
- Fig. 6: einen Detailausschnitt der Darstellung nach Fig. 5.

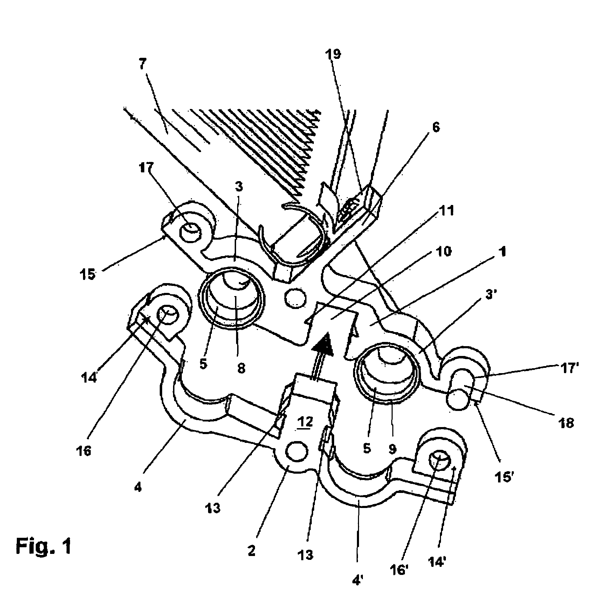

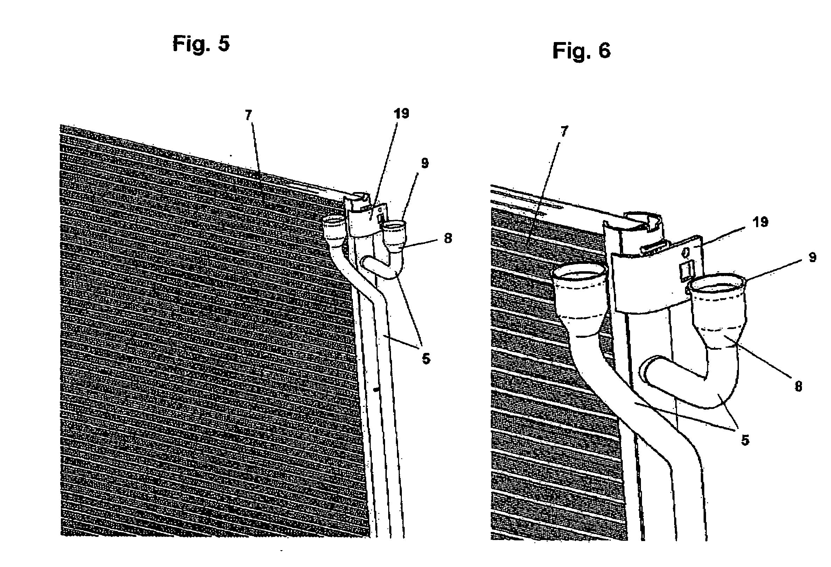

Bei der in Fig. 1 dargestellten Ausführungsform weist die erfindungsgemäße Vorrichtung einen ersten Bügel 1 und einen zweiten Bügel 2 auf. Jeder Bügel bildet zwei Halbschalen 3, 3', 4 und 4' aus, die zusammengesetzt bei verbundenen Bügeln sich zu zwei im Wesentlichen zylinderförmigen Aufnahmen für ein Rohrleitungspaar 5 ergänzen. Der dargestellte erste Bügel 1 weist zudem eine Lasche 6 zur Befestigung der Vorrichtung an einem Wärmetauscher 7 eines Fahrzeugs auf. Ebenfalls erkennbar ist, dass die Endabschnitte des Rohrleitungspaares 5 einen konisch verlaufenden Rohrabschnitt 8 zur Rohrerweiterung besitzen. Der erweiterte Rohrabschnitt dient beispielsweise der Aufnahme eines Endabschnittes einer weiteren Rohrleitung, die zudem endseitig eine Bördelung 9 aufweisen kann (siehe Fig. 5 und 6).

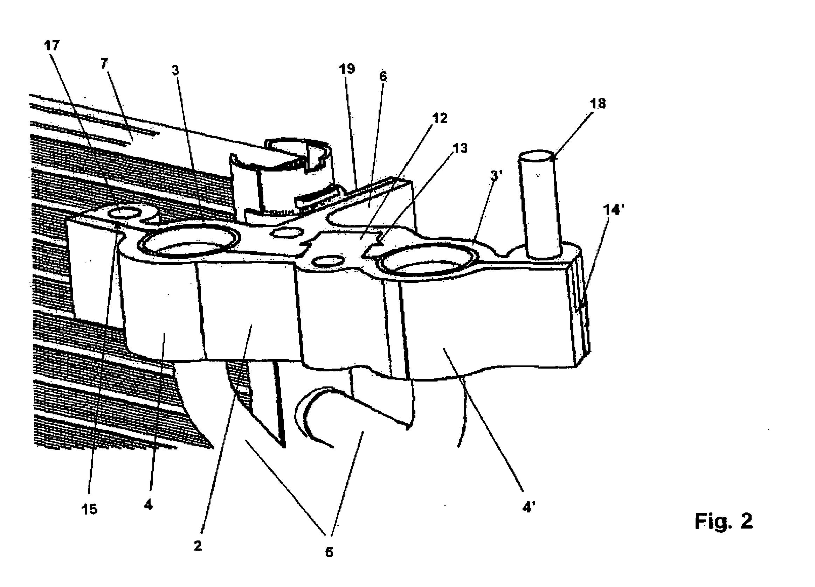

Die Verbindung beider Bügel 1, 2 erfolgt in dem Ausführungsbeispiel nach den Fig. 1 und 2 auf zwei Arten. Zum einen weist der erste Bügel 1 eine Ausnehmung 10 mit zwei seitlichen Nuten 11 auf, die die Ausnehrnung hinterschneiden. Korrespondierend hierzu weist der zweite Bügel 2 einen Ansatz 12 mit zwei seitlichen Rastnasen 13 auf. Zur Verbindung der beiden Bügel 1, 2 müssen diese lediglich zusammengesetzt und der Ansatz 12 mit den Rastnasen 13 in die Ausnehmung 10 mit den Nuten 11 gedrückt werden (siehe Pfeil in Fig. 1): Hierbei gelangen die jeweils mit einer Öffnung 16, 16', 17, 17' versehenen Befestigungslaschen 14, 14', 15, 15' derart in Anlage miteinander, dass sich die Öffnungen 15 und 16 sowie 15' und 16' überdecken und jeweils ein Stift 18 zwecks Verriegelung eingeführt werden kann (siehe Fig. 2).

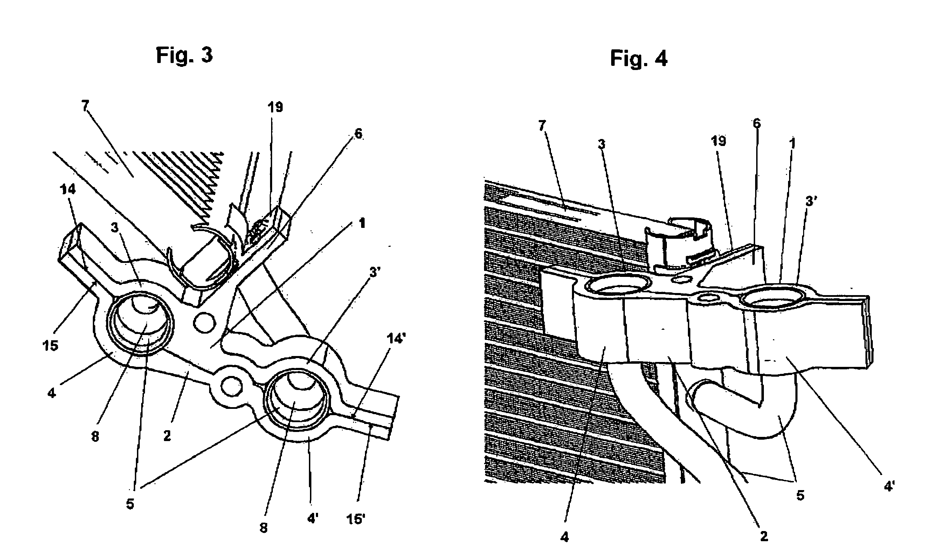

Den Fig. 3 und 4 ist eine weitere Ausführungsform der Vorrichtung zu entnehmen. Hier laufen die Halbschalen 3, 3', 4, 4' der beiden Bügel 1, 2 jeweils in flanschartige Anlageflächen 14, 14', 15, 15' aus, die miteinander verschraubt werden. Hierzu weisen die Anlageflächen jeweils sich überdeckende Öffnungen in Querrichtung der Rohrleitungs-Längsachse zur Aufnahme der Schrauben auf (nicht dargestellt).

Auch bei der Ausführungsform entsprechend der Fig. 3 und 4 ist an dem ersten Bügel 1 eine Lasche 6 zur Befestigung an einem Wärmetauscher 7 angeformt. Die Lasche 6 wird hierzu mit einer an dem Wärmetauscher 7 angeordneten Halteplatte 19 verschraubt. Alternativ können die Lasche 6 und die Halteplatte 19 auch derart ausgestaltet sein, dass sie mittels eine Stift-, Steck-, Rast- und/oder Klemmverbindung verbunden werden können. Diese Verbindungsarten bieten sich insbesondere an, wenn wie vorliegend die Halteplatte 19 aus Aluminium und der Bügel 1 aus Kunststoff besteht.

Eine Halteplatte 19 an einem Wärmetauscher zeigen insbesondere die Fig. 5 und 6. Hier ist die Halteplatte 19 an einem der seitlichen Sammelrohre des Wärmetauschers befestigt. Alternativ kann auf eine zusätzliche Halteplatte 19 auch verzichtet werden und die Lasche 6 eines Bügels 1, 2 an beliebiger Stelle direkt mit dem Wärmetauscher verschraubt werden. Es ist auch möglich, beide Bügel 1, 2 mit einer Lasche 6 zur Verbindung mit dem Wärmetauscher auszustatten.

Die in den Fig. 1 bis 6 dargestellten Ausführungsformen stellen lediglich Beispiele der Erfindung dar. Die Erfindung ist somit hierauf nicht beschränkt. Insbesondere sind einzelne Merkmale der gezeigten Ausführungsbeispiele im Umfang der Patentansprüche miteinander kombinierbar.

## Patentansprüche

1. Vorrichtung zur Verbindung wenigstens eines Rohrleitungspaares umfassend einen ersten Bügel (1) und einen zweiten Bügel (2), die miteinander verbindbar sind,
**dadurch gekennzeichnet, dass**
der erste Bügel (1) und der zweite Bügel (2) jeweils zwei Halbschalen (3, 3', 4, 4') ausbilden, die bei miteinander verbundenen Bügeln (1, 2) sich gegenüberliegen und im Wesentlichen zylinderförmige Aufnahmen für wenigstens ein Rohrleitungspaar (5) bilden, ferner, dass wenigstens ein Bügel eine Lasche (6) zur direkten oder indirekten Befestigung an einem Bauteil (7), insbesondere an einem Wärmetauscher eines Fahrzeugs, aufweist.

2. Vorrichtung nach Anspruch 1, **dadurch gekennzeichnet, dass** die Halbschalen (3, 3', 4, 4') in Rohrleitungs-Längsrichtung wenigstens einen konisch verlaufenden Abschnitt zur Aufnahme eines aufgeweiteten Rohrabschnittes (8) aufweisen.

3. Vorrichtung nach Anspruch 1 oder 2, **dadurch gekennzeichnet, dass** die Halbschalen (3, 3', 4, 4') wenigstens eine in einer Ebene quer zur Rohrleitungs-Längsrichtung verlaufende Nut zur Aufnahme einer Bördelung (9) einer Rohrleitung aufweisen.

4. Vorrichtung nach einem der Ansprüche 1 bis 3, **dadurch gekennzeichnet, dass** der erste Bügel (1) und der zweite Bügel (2) mittels einer Schraub-, Stift-, Steck-, Rast- und/oder Klemmverbindung miteinander verbindbar sind.

5. Vorrichtung nach einem der Ansprüche 1 bis 4, **dadurch gekennzeichnet, dass** einer der beiden Bügel (1, 2) zur Verbindung mit dem jeweils anderen Bügel eine Ausnehmung (10) mit wenigstens einer die Ausnehmung hinterschneidenden Nut (11) zur Aufnahme eines mit wenigstens einer Rastnase (13) versehenen Ansatzes (12) des anderen Bügels aufweist.

6. Vorrichtung nach einem der Ansprüche 1 bis 5, **dadurch gekennzeichnet, dass** beide Bügel (1, 2) zur Verbindung miteinander korrespondierende Anlageflächen (14, 14', 15, 15') mit Öffnungen (16, 16', 17, 17') zur Aufnahme eines Verbindungsmittels (18), vorzugsweise eines Stiftes, aufweisen, wobei sich die Öffnungen aneinander liegender Flächen jeweils überdecken.

7. Vorrichtung nach einem der Ansprüche 1 bis 6, **dadurch gekennzeichnet, dass** die wenigstens eine Lasche (6) eines Bügels (1, 2) mittels einer Schraub-, Stift-, Steck-, Rast- und/oder Klemmverbindung direkt oder indirekt an dem Bauteil (7) befestigbar ist.

8. Vorrichtung nach einem der Ansprüche 1 bis 7, **dadurch gekennzeichnet, dass** beide Bügel (1, 2) aus Kunststoff sind.

9. Verwendung einer Vorrichtung nach einem der Ansprüche 1 bis 8 zur Verbindung wenigstens eines Rohrleitungspaares (5) miteinander und zur Befestigung des Rohrleitungspaares (5) an einem Wärmetauscher eines Fahrzeugs.

10. Wärmetauscher eines Fahrzeugs **gekennzeichnet durch** eine Vorrichtung nach einem der Ansprüche 1 bis 9.

11. Wärmetauscher nach Anspruch 10, **dadurch gekennzeichnet, dass** er wenigstens eine Halteplatte (19) zur Aufnahme der Lasche (6) eines Bügels (1, 2) aufweist.

12. Wärmetauscher nach Anspruch 11, **dadurch gekennzeichnet, dass** die Halteplatte (19) aus Aluminium oder einer Aluminiumlegierung besteht und mit dem Wärmetauscher verlötet und/oder verschraubt ist.
